Europäisches Patentamt

European Patent Office

Office européen des brevets

(11) Numéro de publication : **0 039 279**
**B1**

# FASCICULE DE BREVET EUROPÉEN

(45) Date de publication du fascicule du brevet :
19.12.84

(51) Int. Cl.³ : **H 02 M   1/08**

(21) Numéro de dépôt : **81400631.8**

(22) Date de dépôt : **21.04.81**

(54) **Interrupteur statique haute tension et utilisation pour un générateur haute tension commutable.**

(30) Priorité : **29.04.80 FR 8009619**

(43) Date de publication de la demande :
**04.11.81 Bulletin 81/44**

(45) Mention de la délivrance du brevet :
**19.12.84 Bulletin 84/51**

(84) Etats contractants désignés :
**DE GB IT SE**

(56) Documents cités :
**FR-A- 1 521 349**
**FR-A- 2 041 951**
**FR-A- 2 097 302**
**FR-A- 2 279 250**
**US-A- 3 889 175**

(73) Titulaire : **THOMSON-CSF**
**173, Boulevard Haussmann**
**F-75379 Paris Cedex 08 (FR)**

(72) Inventeur : **Dassonville, Jacques**
**Thomson-CSF SCPI 173, bld Haussmann**
**F-75360 Paris Cedex 08 (FR)**

(74) Mandataire : **Trocellier, Roger et al**
**THOMSON-CSF SCPI 173, Bld Haussmann**
**F-75379 Paris Cedex 08 (FR)**

Jouve, 18, rue St-Denis, 75001 Paris, France

## Description

La présente invention concerne des perfectionnements aux interrupteurs statiques haute tension et s'applique avantageusement à la réalisation d'un générateur haute tension commutable.

Il est connu d'utiliser un pont d'interrupteurs commandés électriquement, à base d'éléments semi-conducteurs, pour fermer un circuit de charge ou bien ouvrir un circuit de décharge haute tension et faire varier ainsi par valeur discrète le niveau de la haute tension destinée à un circuit d'utilisation. Le pont est souvent constitué au moyen d'une pluralité de thyristors connectés en série, ayant chacun une diode à avalanche connectée en parallèle et en sens inverse pour la protection contre les surcharges. Le nombre de composants interrupteurs à placer en série est fonction de la tension maximale admissible par le composant et de la haute tension à commuter, ainsi que du coût et de la complexité des circuits de commande. Ces derniers comportent un transformateur avec un enroulement primaire couplé à autant d'enroulements secondaires qu'il y a d'interrupteurs à commander. Une réalisation de ce genre est décrite entre autres dans le brevet français n° 72 42259 déposé par la demanderesse et publié sous le n° 2 208 258.

Cette technique présente de multiples inconvénients. En particulier, pour des réalisations miniaturisées, les enroulements pourront être supportés par un noyau de ferrite mais il s'avère difficile d'obtenir un isolement suffisant et un bon couplage, la répartition des flux ne peut être bien équilibrée pour tous les enroulements secondaires et la durée de vie reste assez limitée.

L'invention a pour but de réaliser un interrupteur statique haute tension miniaturisé présentant une grande fiabilité qui permet de remédier aux inconvénients précités. On pourra se rendre compte en outre qu'il supporte un isolement très important, aisément de plusieurs dizaines de KV, et qu'il peut être fabriqué aisément à partir d'une cellule ou d'un module de base.

Il est connu d'autre part, par le brevet US-A-3 889 175 (HITACHI) un convertisseur alternatif-continu pour délivrer de l'énergie électrique sous haute tension en continu. Le convertisseur comporte des batteries de thyristors connectés en série, chacune entre une entrée alternative et une sortie continue. La commande des thyristors utilise une structure avec un conducteur isolé qui traverse des tores magnétiques pourvus chacun d'un enroulement connecté par ses extrémités à un thyristor associé, entre la gachette et la cathode. Le conducteur central rectiligne qui traverse les tores empilés joue le rôle de primaire et reçoit une impulsion de commande de l'extérieur à travers un transformateur 7 d'adaptation.

Cette structure se retrouve dans d'autres applications ayant trait à des tensions élevées. En particulier, les documents de brevet FR-A-2 041 951 (CGE) et FR-A-2 097 302 (CGE) décrivent des circuits de commande de plusieurs réseaux de thyristors répartis en sections, en utilisant un générateur de signaux sinusoïdaux de commande, des moyens de couplage inductif pour relier ce générateur au conducteur primaire de chaque section respectivement, et un circuit entre chaque enroulement secondaire et le thyristor associé. Ce dernier circuit comprend, selon une réalisation, une capacité connectée directement aux bornes de l'enroulement secondaire pour sélectionner le signal sinusoïdal correspondant à la fréquence d'accord du circuit oscillant ainsi formé, et un dispositif redresseur composé de deux diodes connectées par une même électrode respectivement aux extrémités de l'enroulement et par leur autre électrode à la gâchette du thyristor, et d'une connexion de retour entre la cathode du thyristor et le point milieu de l'enroulement.

On se rend compte que la structure commune composée d'un câble primaire traversant des tores pourvus chacun d'un enroulement secondaire, et d'une batterie de thyristors, est utilisée de diverses façons dans les dispositifs précités.

Dans un dispositif conforme à l'invention, la fonction assurée est celle d'interrupteur haute tension. Elle est obtenue en utilisant aussi une telle structure, en branchant le pont de thyristors pour fermer une connexion reliant une source haute tension continue à une charge à alimenter, et en utilisant un circuit avec des diodes et une capacité pour relier chaque enroulement secondaire au thyristor associé, ce circuit étant déterminé pour permettre le fonctionnement en courant continu désiré, avec maintien du courant de gâchette en réponse à une commande par impulsions périodiques appliquée au câble primaire.

Selon l'invention, il est proposé de réaliser un interrupteur statique haute tension utilisant une structure connue en soi composée d'un réseau de n éléments interrupteurs unidirectionnels en circuit solide à commande électrique connectés en série et de moyens de commande pour la commande simultanée des interrupteurs solides en utilisant un transformateur dont l'enroulement primaire est un fil conducteur isolé qui traverse n tores munis chacun d'un enroulement secondaire connecté à un interrupteur solide à travers un circuit à diodes, un circuit annexe élaborant un signal de commande appliqué audit primaire, chaque circuit à diodes comportant une première diode connectée entre une première extrémité de l'enroulement secondaire et une entrée de commande de l'interrupteur solide associé, une deuxième diode entre la deuxième extrémité de l'enroulement de ladite entrée de commande, une connexion de retour entre la sortie de l'interrupteur et un point intermédiaire de l'enroulement, et une capacité, l'interrupteur statique étant destiné à commuter une haute tension continue sur une charge et pour ce faire caractérisé en ce que la capacité est connectée en parallèle entre ladite entrée de commande et ladite connexion de retour, le réseau étant disposé entre une borne terminale d'entrée destinée au raccordement extérieur à une source continue haute tension et une borne terminale de sortie destinée au raccordement extérieur à une charge.

Les particularités et avantages de l'invention apparaîtront dans la description qui suit donnée à titre d'exemple non limitatif à l'aide des figures annexées qui représentent :

Figure 1 un diagramme général d'un interrupteur statique haute tension conforme à l'invention ;

Figure 2, un exemple de réalisation d'un interrupteur selon la figure 1 ;

Figure 3, un diagramme simplifié relatif à une application à un générateur haute tension commutable ;

Figures 4 et 5, deux variantes de réalisation d'un interrupteur selon l'invention pour permettre un fonctionnement bidirectionnel.

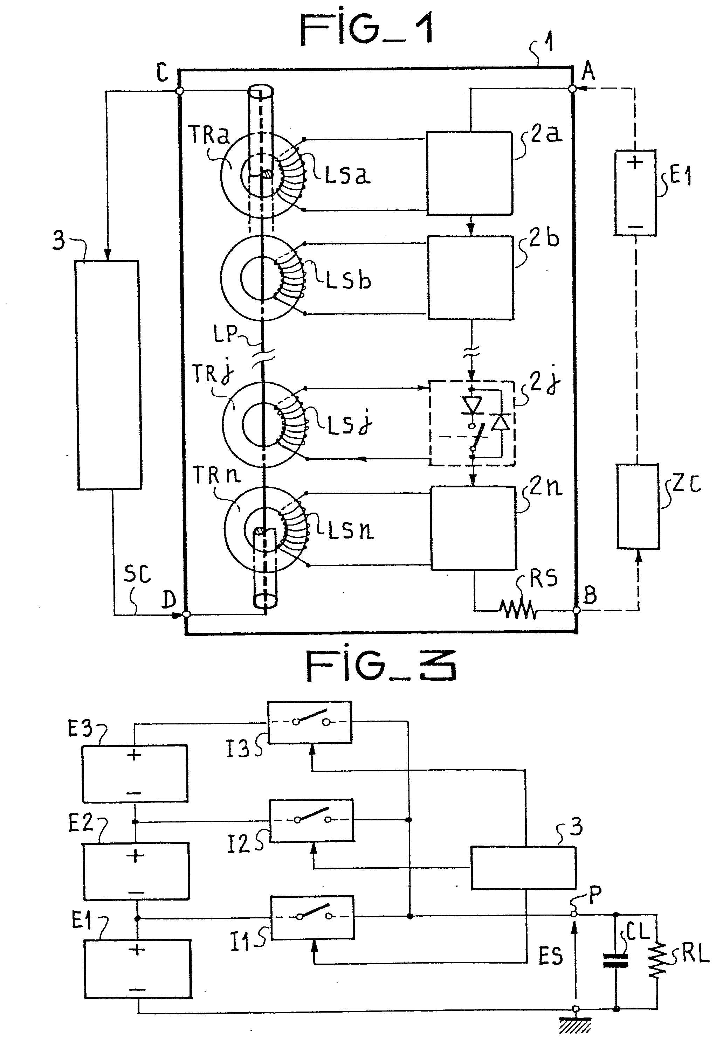

En se reportant à la figure 1, l'interrupteur statique haute tension est représenté par le bloc 1. Un pont de n thyristors ou autres composants semi-conducteurs équivalents connectés en série, est représenté par les circuits interrupteurs 2a à 2h. Chaque circuit interrupteur 2j est commandé à partir d'un enroulement secondaire LSj. Les n enroulements secondaires LSj à LSn sont couplés à un enroulement primaire unique LP. Le circuit 3 élabore un signal de commande SC permettant de faire passer un courant dans l'enroulement primaire et consécutivement, par le biais des enroulements secondaires, de commander la fermeture des circuits interrupteurs 2a à 2n. Le circuit est représenté extérieur à l'interrupteur 1 proprement dit, étant donné notamment qu'il peut être conçu pour commander plusieurs interrupteurs statiques haute tension. Les bornes A et B à l'extrémité du pont constituent les bornes de branchement de l'interrupteur dans le circuit d'exploitation, entre une source continue haute tension E1 et une impédance de charge Zc. Une résistance RS en série avec le pont est généralement prévue pour limiter le courant maximal dans cette branche pour les composants interrupteurs. Cette résistance RS peut être disposée dans l'interrupteur 1 comme figuré dans le cas où les conditions d'exploitation sont définies à l'avance et par conséquent sa valeur connue, ou montée extérieurement à la demande dans les autres cas sa valeur étant déterminée en conséquence. Les circuits interrupteurs 2a à 2n sont unidirectionnels comme symbolisés fonctionnellement dans le bloc 2-j et le courant circulant dans le pont a le sens indiqué.

En l'état actuel de la technique des semiconducteurs à faible puissance, une tenue en tension de l'ordre de 1 KV paraît devoir être considérée comme une valeur maximale. Dans ces conditions, un pont à base de n composants interrupteurs en série autorise une commutation n'excédant pas n KV. Les semiconducteurs adaptés à cette technique peuvent être des transistors bipolaires, des thyristors ayant un courant de maintien supérieur au courant maximal de la charge Zc, des dispositifs à effet de champ, etc...

Conformément à l'invention, le couplage entre primaire et secondaire est produit au moyen de tores TRa à TRn. Chaque tore supporte un enroulement constituant un enroulement secondaire LSj. L'enroulement primaire LP est constitué par un conducteur isolé qui traverse tous les tores sensiblement selon la direction axiale correspondante ; l'isolement du fil conducteur est déterminé pour tenir la tension de service exigée pour l'interrupteur 1. Le montage est ainsi en fait formé de n transformateurs avec chacun une spire unique au primaire constituée sensiblement par la fraction du conducteur LP qui traverse le tore correspondant perpendiculairement à son plan. Selon un mode préféré de réalisation, les tores sont empilés et le primaire LP est constitué par un élément de câble haute tension disposé selon l'axe commun des tores.

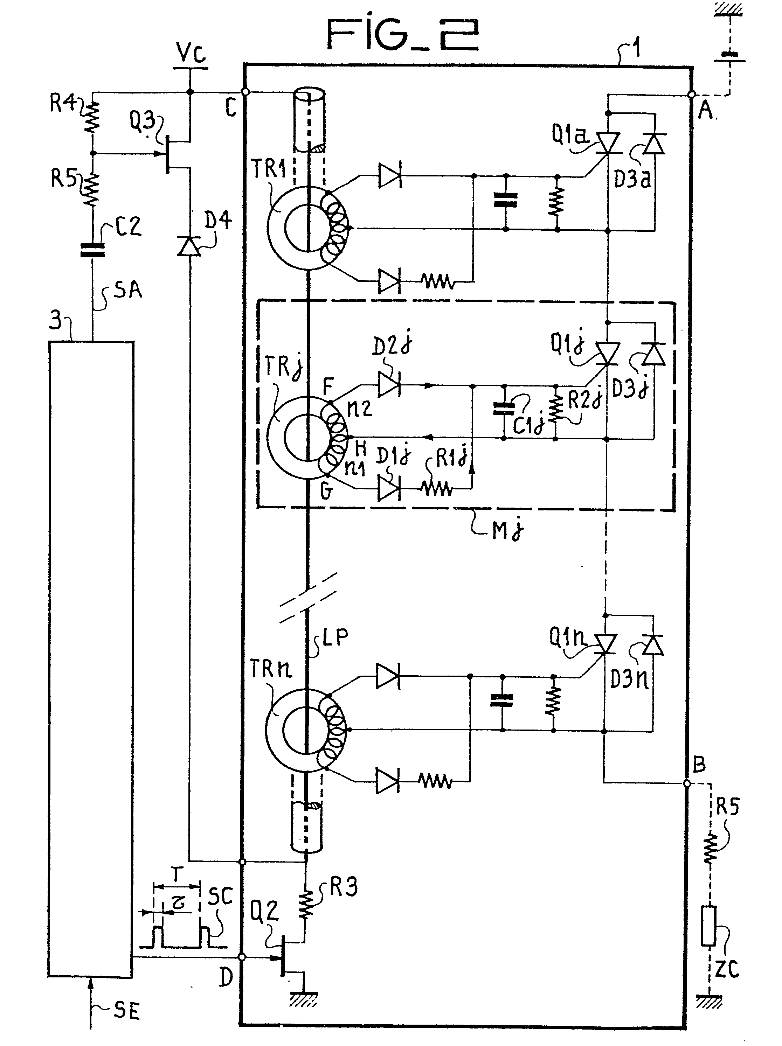

La figure 2 représente un exemple de réalisation possible d'un interrupteur statique haute tension conforme à l'invention. Le réseau entre les bornes A et B est constitué par un pont de thyristors Q1a à Q1n, chaque thyristor Q1j étant protégé par une diode à avalanche D3j dont la tension d'avalanche est inférieure à la tension de claquage du thyristor. Chaque module de base comporte, comme représenté pour le module Mj relatif au tore TRj deux diodes D1j et D2j disposés respectivement sur les connexions allant des extrémités F et G de l'enroulement secondaire LSj à l'électrode de commande, dite gâchette, du thyristor Q1j. Le sens de passage du courant dans le câble au travers de chaque tore est tel que l'entrée de l'enroulement primaire Lp connectée au point C est en phase avec le point G de l'enroulement secondaire. Sur la connexion issue de G une résistance R1j est interposée. La connexion de retour entre le circuit interrupteur Q1j-D3j, correspondant au bloc 2j de la Figure 1, et l'enroulement secondaire LSj parvient à un point intermédiaire H de l'enroulement. Entre le point intermédiaire H et les extrémités G et F, l'enroulement comporte respectivement n1 et n2 spires. Une capacité C1j ainsi qu'éventuellement une résistance R2j, sont connectées en parallèle entre la connexion de gâchette et la connexion de retour.

Le circuit de commande 3 reçoit un signal extérieur SE de commande de mise en marche de l'interruption 1, le signal SE peut être sous forme binaire la valeur « 1 » correspondant à la mise en marche et la valeur « 0 » à l'arrêt. Sur réception du signal SE de valeur « 1 », le circuit 3 élabore le signal SC formé d'impulsions périodiques de durée $\tau$ et de période T. Le signal SC est appliqué à un circuit interrupteur Q2 tel un transistor à effet de champ, connecté à une extrémité de l'enroulement LP dont l'autre extrémité C est connectée à un potentiel fixe + Vc d'une alimentation continue basse tension annexe, par exemple Vc = + 15 V. La résistance R3 interposée en série avec l'interrupteur Q2 sert à limiter le courant primaire.

Le fonctionnement est le suivant : le signal SE étant égal à « 1 », le signal SC est délivré et provoque la fermeture périodique de l'interrupteur Q2 et l'application à chaque fois de la tension Vc aux bornes du primaire LP durant l'intervalle τ.

Une première phase de fonctionnement est produite durant l'intervalle τ de l'impulsion SC, c'est la phase de fonctionnement en direct (dite en « forward » selon la terminologie anglo-saxonne). La tension + Vc est appliquée sur l'ensemble des n transformateurs en série. La tension induite $e_1$ sur chaque secondaire entre H et G est voisine de $(Vc - R3 \cdot Ip/n) \cdot n1$, Ip étant le courant primaire. Cette tension $e_1$ produit un courant secondaire IS1 à travers D1j et R1j vers la gâchette du thyristor. La tension induite entre F et H ne donne pas lieu à un courant compte tenu du blocage par la diode D2j. Le courant IS1 a sa valeur initiale limitée grâce à la résistance R1j à une valeur déterminée assurant la conduction du thyristor Q1j pour un courant d'anode même inférieur à sa valeur de maintien, en sorte qu'il ne puisse pas se désamorcer. La durée de cette phase est fonction de la capacité du flux maximal du tore utilisé ; ensuite, le courant secondaire diminue exponentiellement par suite de la saturation des transformateurs, le courant primaire étant enfin stabilisé à la valeur $I_{PM} = Vc/R3$.

Une deuxième phase de fonctionnement est produite durant l'intervalle $T - τ$ séparant deux impulsions SC, c'est la phase de fonctionnement en retour (dite « flyback » selon la terminologie anglo-saxonne). L'énergie emmagasinée dans le tore égale à : $W = 1/2 \, L_R I^2_{PM}$, avec $L_R$ inductance résiduelle du primaire, est restituée dans le circuit secondaire entre H et F donnant naissance à un courant initial $I_{S2} = I_{PM}/n2$ à travers la diode D2j.

Le rapport d'énergie entre les deux phases de fonctionnement doit être optimisé pour obtenir une modulation du courant suffisamment faible pour être absorbée par le condensateur tampon C1j. Pour un tore donné, les variables à considérer pour ce faire sont les suivantes : la fréquence de fonctionnement, le rapport cyclique du signal impulsionnel SC, le rapport n1/n2, et les valeurs des résistances R1j et R3. Dans ces conditions, le courant de gâchette reste assuré en permanence.

L'arrêt de l'interrupteur 1 résulte de la suppression des impulsions SC par suite du passage à « 0 » du signal SE. Le blocage est accéléré en dissipant l'énergie emmagasinée grâce à un montage complémentaire représenté utilisant un interrupteur Q3 aux bornes du primaire et qui, devenant conducteur, supprime immédiatement tout courant secondaire. Lors de la commande d'arrêt, la sortie SA commande la fermeture du transistor à effet de champ Q3. La résistance R2j décharge la capacité C1j qui était chargée à la valeur moyenne présentée entre gâchette et cathode du thyristor. La résistance R2j peut déjà faire partie du composant interrupteur Q1j. La commande de l'interrupteur 1 ainsi aménagée permet un temps de réponse très rapide, de l'ordre de la microseconde.

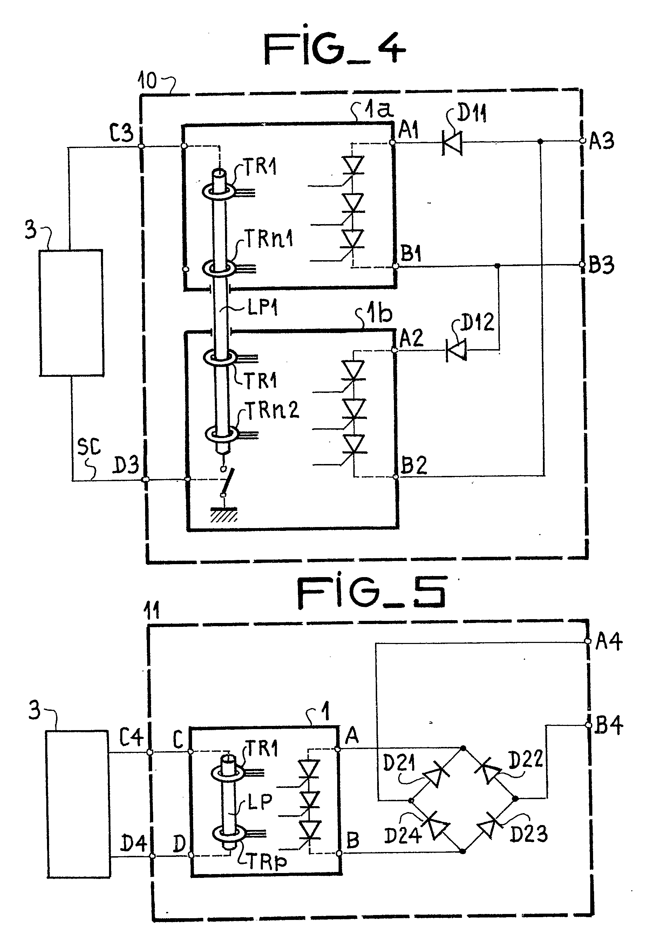

La figure 3 représente une application à un générateur haute tension commutée destiné à produire cycliquement une tension continue ES variable par paliers. Ce type de générateur est envisagé plus particulièrement pour alimenter un tube cathodique du type à pénétration formant une impédance de charge constituée par une capacité faible CL et une résistance élevée RL, en parallèle. Le générateur comporte trois interrupteurs statiques haute tension I3, I2 et I1 dont la fermeture successive, les deux autres interrupteurs étant ouverts, permet de produire : ES = E1 + E2 + E3, puis E1 + E2 et enfin E1 au cours d'un cycle. Le montage des trois blocs haute tension E1, E2 et E3 en série en facilite leur exécution et est rendue possible par l'utilisation d'interrupteurs statiques haute tension conforme à l'invention. Le problème d'isolement se trouve reporté au niveau des interrupteurs I1, I2 et I3 connectés respectivement entre une borne de sortie positive d'un bloc haute tension et la borne correspondante P de l'utilisation. Les interrupteurs I3 et I1 sont unidirectionnels car I3 commute toujours un courant de charge et I1 commute toujours un courant de décharge. Les diodes D3a à D3n de l'interrupteur I1 assurent le passage du courant permanent direct du bloc E1 correspondant au palier bas de tension. Par contre, l'interrupteur I2 doit être bidirectionnel pour commuter un courant positif ou négatif dans la charge. La réalisation de l'interrupteur I2 peut consister en deux interrupteurs unidirectionnels montés tête-bêche en parallèle, ou bien, en un unique interrupteur unidirectionnel monté dans une diagonale d'un pont de quatre diodes haute tension.

Deux variantes de réalisation correspondantes sont illustrées sur les figures 4 et 5.

Suivant la figure 4, l'interrupteur bidirectionnel 10 résulte d'un montage unidirectionnel dans lequel la série de circuits interrupteurs élémentaires 2j est scindée en deux groupements de n1 et n2 circuits respectivement et de l'adjonction de deux diodes d'aiguillage D11 et D12 sur les connexions aux bornes de sortie A3 et B3 de l'interrupteur 10. La diode D11 ayant le sens indiqué autorise la circulation du courant dans le sens A3 vers B3 lorsque les circuits interrupteurs élémentaires sont fermés, inversement le courant peut circuler dans le sens B3 vers A3 à travers D12. Le montage correspond à celui tête-bêche de deux interrupteurs unidirectionnels 1a et 1b ayant respectivement n1 et n2 tores ; l'aiguillage par les diodes D11 et D12 permet d'utiliser l'un des interrupteurs, par exemple 1a en présence d'un courant de charge et l'autre, 1b en l'occurrence, dans le cas d'un courant de décharge. Les primaires sont avantageusement réalisés par le câble unique LP1 pour les deux blocs 1a et 1b commandés par le circuit 3. Dans une application selon la figure 3, l'interrupteur bidirectionnel I2 doit bloquer soit la tension E2 soit la tension E3, et les interrupteurs I1 et I3 comportent n tores, l'interrupteur I2 comporte également n1 + n2 = n tores au total, les valeurs n1 et n2 étant déterminées en relation avec les valeurs E2 et E3. Par exemple, pour E2 = E3 on aura n1 = n2 = n/2.

Suivant la figure 5 l'interrupteur bidirectionnel 11 est formé par un interrupteur 1 précédemment décrit disposé dans une diagonale d'un pont de quatre diodes haute tension D21, D22, D23 et D24. La deuxième diagonale de pont est connectée aux bornes de raccordement A4 et B4 du montage. Le courant circule toujours de A vers B dans l'interrupteur 1 lorsque celui-ci est fermé. Dans le contexte de l'application de la figure 3 pour E2 = E3, un nombre p = n/2 de tores sera suffisant, soit la moitié de celui des interrupteurs I1 et I3.

La réalisation modulaire peut être obtenue par un montage sur une plaque de céramique des différents éléments semiconducteurs ou composants solides du module Mj et du tore TRj pourvu de son enroulement LSj. Les connexions de raccordement entre les éléments peuvent être réalisées selon des techniques de circuit imprimé ou par dépôt. Le support en céramique est percé pour livrer passage au câble isolé formant le primaire LP. La structure modulaire permet de faciliter la fabrication, les contrôles et la standardisation par groupement du nombre nécessaire de modules.

Les conditions d'isolement de l'interrupteur statique haute tension se trouvent reportées au niveau de l'élément de câble haute tension formant le primaire LP. Par voie de conséquence, le diamètre du câble isolé impose la taille des tores et des modules.

En conclusion, les avantages offerts par la solution décrite contribuent à faciliter la réalisation de l'interrupteur haute tension qui peut être construit sous forme miniaturisée, présente une grande fiabilité et une rapidité élevée liée à l'utilisation de semiconducteurs.

## Revendications

1. Interrupteur statique haute tension utilisant une structure connue en soi composée d'un réseau de n éléments interrupteurs unidirectionnels en circuit solide à commande électrique connectés en série et de moyens de commande pour la commande simultanée des interrupteurs solides en utilisant un transformateur dont l'enroulement primaire est un fil conducteur isolé qui traverse n tores munis chacun d'un enroulement secondaire connecté en un interrupteur solide à travers un circuit à diodes, un circuit annexe élaborant un signal de commande appliqué audit primaire, chaque circuit à diodes comportant une première diode (D1j) connectée entre une première extrémité (G) de l'enroulement secondaire et une entrée de commande de l'interrupteur solide (Q1j) associé, une deuxième diode (D2j) entre la deuxième extrémité (F) de l'enroulement et ladite entrée de commande, une connexion de retour entre la sortie de l'interrupteur et un point intermédiaire (H) de l'enroulement, et une capacité (C1j), l'interrupteur statique étant destiné à commuter une haute tension continue sur une charge et pour ce faire caractérisé en ce que la capacité (C1j) est connectée en parallèle entre ladite entrée de commande et ladite connexion de retour, le réseau étant disposé entre une borne terminale d'entrée (A) destinée au raccordement extérieur à une source continue haute tension (E1) et une borne terminale de sortie (B) destinée au raccordement extérieur à une charge (Zc).

2. Interrupteur selon la revendication 1, caractérisé en ce que l'inducteur primaire est connecté à une source continue annexe (Vc) à travers un dispositif interrupteur (Q2) commandé électriquement par le signal de commande (SC) constitué d'impulsions périodiques.

3. Interrupteur selon la revendication 2, caractérisé en ce qu'un deuxième dispositif interrupteur (Q3) est connecté aux bornes du conducteur primaire et est commandé électriquement par un deuxième signal (SA) élaboré par le circuit de commande 3 et que celui-ci reçoit une commande numérique binaire extérieure (SE) pour commander la mise en marche et l'arrêt de l'interrupteur, et délivre, pour l'état correspondant à la mise en marche, le signal de commande impulsionnel (SC) fermant périodiquement le premier dispositif interrupteur et, pour l'état correspondant à l'arrêt, le signal de commande (SA) fermant le deuxième dispositif interrupteur, lesdits dispositifs interrupteurs étant réalisés avec des transistors à effet de champ.

4. Interrupteur selon l'une quelconque des revendications précédentes, et dans lequel les tores sont empilés pour présenter un axe commun suivant lequel est disposé un élément de câble haute tension formant l'enroulement primaire, caractérisé en ce qu'il est réalisé à partir de modules, un module (Mj) groupant un tore (TRj) équipé de son enroulement (LSj), le circuit à diodes et l'interrupteur solide associé.

5. Interrupteur selon la revendication 4, caractérisé en ce que chaque module est constitué au moyen d'une plaque en céramique supportant le tore avec son enroulement, le circuit à diodes et l'interrupteur solide, percée d'un trou pour le passage du primaire et comportant des connexions de raccordement sous forme de métallisations.

6. Interrupteur selon l'une quelconque des revendications 1 à 5, caractérisé en ce que les circuits interrupteurs solides sont réalisés par un pont de thyristors ayant chacun en parallèle une diode de protection du type à avalanche, chaque circuit à diodes comportant une première résistance (R1j) en série avec l'une des diodes sur la liaison allant d'une extrémité de l'enroulement secondaire à la gâchette du thyristor associé, et une deuxième résistance (R2j) connectée en parallèle avec la capacité (C1j).

7. Interrupteur selon l'une quelconque des revendications précédentes, caractérisé en ce que le réseau de n circuits interrupteurs est scindé en deux groupements ayant respectivement n1 et n2 circuits en série (avec n = n1 + n2), chaque groupement étant connecté par ses extrémités (A1, B1 et A2, B2) à deux bornes de raccordement (A3, B3) pour l'utilisation, lesdites connexions s'effectuant respectivement à travers une diode d'aiguillage (D11, D12) pour chaque groupement en sorte de permettre le fonctionnement bidirectionnel de l'interrupteur (10).

8. Interrupteur selon l'une quelconque des revendications 1 à 6, caractérisé en ce que les extrémités du réseau de n circuits interrupteurs sont connectés à une diagonale d'un pont de quatre diodes haute tension (D21, D22, D23, D24), la deuxième diagonale du pont étant connectée à deux bornes de raccordement (A4, B4) pour l'utilisation, en sorte d'autoriser le fonctionnement bidirectionnel de l'interrupteur (11).

9. Utilisation d'interrupteurs unidirectionnels selon l'une quelconque des revendications 1 à 6 et d'un interrupteur bidirectionnel selon l'une quelconque des revendications 7 et 8 pour réaliser un générateur haute tension commutée, caractérisé par un arrangement comportant un premier (E1), un deuxième (E2) et un troisième (E3) blocs haute tension connectés en série et reliés respectivement par leur borne de même polarité à travers un interrupteur statique haute tension (I1, I2, I3) à une borne (P) de raccordement à la charge extérieure, le deuxième bloc haute tension (E2) étant raccordé à travers un interrupteur bidirectionnel (I2), le circuit de commande (3) commandant la fermeture successive et séparée des interrupteurs au cours d'un cycle de fonctionnement pour produire trois paliers de haute tension.

10. Utilisation selon la revendication 9, caractérisée en ce que le générateur haute tension commutée est destiné à alimenter un tube cathodique à pénétration.

## Claims

1. High voltage static interrupter using a common structure consisting of a network of n unidirectional interrupter elements in an electrically controlled solid state circuit connected in series and control means for the simultaneous control of the solid state interrupters by way of a transformer of which the primary coil is an insulated conductor wire passing through n cores each having a secondary coil connected to a solid state interrupter through a diode circuit, an annex circuit producing a control signal applied to the said primary, each diode circuit comprising a first diode (D1j) connected between a first end (G) of the secondary coil and a control input of the associated solid state interrupter (Q1j), a second diode (D2j) between the second end (F) of the coil and the said control input, a feedback connection between the output of the interrupter and an intermediary point (H) of the coil, and a capacitor (C1j), the static interrupter being destined to switch a high direct voltage on a load and for this purpose characterized in that the capacitor (C1j) is connected in parallel between the said control input and the said feedback connection, the network figuring between an input terminal (A) destined for external connection to a high direct voltage source (E1) and an output end terminal (B) destined for external connection to a load (Zc).

2. Interrupter according to claim 1, characterized in that the primary inductor is connected to an annex direct current source (Vc) through an interrupter device (Q2) electrically controlled by the control signal (SC) consisting of periodic impulsions.

3. Interrupter according to claim 2, in that a second interrupter device (Q3) is connected to the terminals of the primary conductor and is electrically controlled by a second signal (SA) produced by the control circuit 3 and that it receives an external digital binary control (SE) to control the start and stop of the interrupter, and delivers, for the state corresponding to the startup, the impulsional control signal (SC) periodically closing the first interrupter device and, for the state corresponding to the shut-down, the control signal (SA) closing the second interrupter device, the said interrupter devices being built with field effect transistors.

4. Interrupter according to anyone of the preceding claims, and in which the cores are stacked up so as to present a common axis along which the primary coil in the form of a high voltage cable is positioned, characterized in that it is made from modules, a module (Mj) comprising of a core (TRj) equiped with its coil (LSj), the diodes circuit and the associated solid state interrupter.

5. Interrupter according to claim 4, characterized in that each module is made of a ceramic plate supporting the core its coil, the diode circuit and the solid state interrupter, with a hole for the passage of the primary and the comprising connection facilities in the form of metallic deposits.

6. Interrupter according to anyone of claims 1 to 5, characterized in that the solid state interrupter circuits are made of a thyristor bridge having each an avalanche type protection diode in parallel, each diode circuit comprising a first resistor (R1j) in series with one of the diodes on the connection from one end of the secondary coil to the trigger of the associated thyristor, and a second resistor (R2j) connected in parallel with the capacitor (C1j).

7. Interrupter according to anyone of the said claims, characterized in that the network of n interrupter circuits is split into two groups having respectively n1 and n2 circuits in series (with n = n1 + n2), each group being connected by its ends (A1, B1 and A2, B2) to two connecting terminals (A3, B3) for the utilization, the said connections being made by way of a directing diode (D11, D12) for each group respectively so as to allow the bidirectional operation of the interrupter (10).

8. Interrupter according to anyone of the claims 1 to 6, characterized in that the ends of the network of n interrupter circuits are connected to a diagonal of a bridge of four high voltage diodes (D21, D22, D23, D24), the second diagonal of the bridge being connected to two connecting terminals (A4, B4) for the utilization, so as to allow the bidirectional operation of the interrupter (11).

9. Use of unidirectional interrupters according to anyone of the claims 1 to 6 and of a bidirectional interrupter according to anyone of the claims 7 and 8 to build a commuted high voltage generator, characterized by an arrangement comprising of a first (E1), and a second (E2) and a third (E3) high voltage block connected in series and together respectively by their terminals of similar polarity through a static high voltage interrupter (11, 12, 13) to a connecting terminal (P) of the external load, the second high voltage block (E2) being connected through a bidirectional interrupter (12), the control circuit (3) controlling the successive and separate closing of the interrupters during an operation cycle to produce three levels of high voltage.

10. Use according to claim 9, characterized in that the commuted high voltage generator is destined to power a penetration cathode ray tube.

## Ansprüche

1. Statischer Hochspannungs-Unterbrecher, welcher eine an sich bekannte Struktur benutzt, die aus folgenden Elementen besteht : ein Netz von in Serie geschalteten n Ein-Richtungs-Unterbrecher-Elementen in der Form von Feststoff-Stromkreisen mit elektrischer Steuerung und aus Steuermitteln für die gleichzeitige Steuerung der Feststoff-Unterbrecher durch Verwendung eines Transformators, dessen Primärwicklung ein isolierter leitender Draht ist, der durch n Ringkerne durchgeht, von dem jeder mit einer Sekundärwicklung versehen ist, die über einen Dioden-Stromkreis in einen Feststoff-Unterbrecher angeschlossen ist ; wobei ein Ergänzungsstromkreis der benannten, Primärwicklung eingegebenes Signal erarbeitet, wobei jeder Dioden-Stromkreis aufweist : eine erste Diode (D1j), die zwischen einer ersten Endung (G) der Sekundärwicklung und einem Steuereingang des zugeordneten Feststoff-Unterbrechers (Q1j) geschaltet ist, eine zweite Diode (D2j) zwischen der zweiten Endung (F) der Wicklung und genanntem Steuereingang einen Rückkehranschluss zwischen dem Ausgang des Unterbrechers und einem Zwischenpunkt (H) der Wicklung und eine Kapazität (C1j), wobei der statische Unterbrecher dazu bestimmt ist, um eine Gleich-Hochspannung an eine Last zu schalten und dadurch gekennzeichnet um dies zu bewerkstelligen, dass die Kapazität (C1j) parallel zwischen dem benannten Steuereingang und benanntem Rückkehranschluss geschaltet ist, wobei das Netz zwischen einer Eingangs-End-Klemme (A), die zum Aussen-Anschluss an eine Gleich-Hochspannungs-Quelle (E1) bestimmt ist, und einer Ausgangs-End-Klemme (B), die zum Aussen-Anschluss an eine Last (Zc) bestimmt ist, angeordnet ist.

2. Unterbrecher nach Anspruch 1, dadurch gekennzeichnet, dass der Primärinduktor an eine Ergänzungs-Gleichstrom-Quelle (Vc), über eine Unterbrechervorrichtung (Q2), die elektrisch durch das das aus periodischen Impulsen bestehenden Steuersignal (SC) gesteuert wird angeschlossen ist.

3. Unterbrecher nach Anspruch 2, dadurch gekennzeichnet, dass eine zweite Unterbrechervorrichtung (Q3) an den Anschlussklemmen des Primär-Leiters angeschlossen ist und elektrisch durch ein zweites Signal (SA) gesteuert wird, das durch den Steuerkreis 3 erarbeitet wird und dass dieser eine äussere binäre numerische Steuerung (SE) empfängt, um den Ein- und Ausschalten des Unterbrechers zu steuern und für, den den Einsatz entsprechenden Zustand, das Impuls-Steuersignal (SC) liefert, das periodisch die erste Unterbrechervorrichtung schliesst und, für den der Sperrung entsprechenden Zustand, das Steuersignal (SA) liefert, das die zweite Unterbrechervorrichtung schliesst, wobei die bennanten Unterbrechervorrichtungen mit Hilfe von Feldeffekt-Transistoren hergestellt werden.

4. Unterbrecher nach irgend einem der vorherigen Ansprüche, und in welchem die Ringkerne übereinander gelagert sind, um eine gemeinsame Achse aufzuweisen, längst welcher ein Hochspannungskabel-Element angeordnet ist, das die Primärwicklung bildet, dadurch gekennzeichnet, dass er aus Modulen hergestellt ist, wobei ein Modul (Mj) einen Ringkern (TRj) mit seiner Wicklung (LSj), den Dioden-Stromkreis und den zugeordneten Feststoff-Unterbrecher zusammenstellt.

5. Unterbrecher nach Anspruch 4, dadurch gekennzeichnet, dass jedes Modul mit Hilfe einer Keramikplatte hergestellt wird, die den Ringkern mit seiner Wicklung, den Dioden-Stromkreis und den Feststoff-Unterbrecher trägt, die ein Loch für den Durchgang des Primär-Kreises aufweist und die Anschlüsse in der Form von Metallbelegen aufweist.

6. Unterbrecher nach irgend einem der Ansprüche 1 bis 5, dadurch gekennzeichnet, dass die Feststoff-Unterbrecher-Kreise aus einer Thyristoren-Brücke bestehen, wobei jedem Thyristor eine Schutz-Diode der Lawinen-Dioden-Art parallel geschaltet ist und wobei jeder Dioden-Stromkreis einen ersten Widerstand (R1j), der in Serie mit einer der Dioden auf der Verbindung zwischen einer Endung der Sekundärwicklung und dem Trigger des zugeordneten Thyristors geschaltet ist, und einen zweiten Widerstand (R2j), der parallel zur Kapazität (C1j) angeschlossen ist, beinhaltet.

7. Unterbrecher nach irgend einem der vorherigen Ansprüche, dadurch gekennzeichnet, dass das Netz von n Unterbrecher-Kreisen in zwei Gruppierungen geteilt ist, die jeweils n1 und n2 (mit n = n1 + n2) in Serie geschaltete Stromkreise aufweist, wobei jede Gruppierung über ihre Endungen (A1, B1 und A2, B2) an zwei Anschluss-Klemmen (A3, B3) für den Verbraucher angeschlossen ist, wobei die genannten Anschlüsse jeweils für jede Gruppierung über eine Verzweigungs-Diode (D11, D12) hergestellt werden, um die Zwei-Richtungs-Funktionnierung des Unterbrechers (10) zu ermöglichen.

8. Unterbrecher nach irgend einem der Ansprüche 1 bis 6, dadurch gekennzeichnet, dass die Endungen des Netzes von n Unterbrecher-Kreisen an eine Diagonale einer Brücke von vier Hochspannungs-Dioden (D21, D22, D23, D24) angeschlossen sind, wobei die zweite Diagonale der Brücke für den Verbraucher an zwei Anschlussklemmen (A4, B4) angeschlossen sind, um die Zwei-Richtungs-Funktionnierung des Unterbrechers (11) zu erlauben.

9. Verwendung von Ein-Richtungs-Unterbrecher nach irgend einem der Ansprüche 1 bis 6 und eines Zwei-Richtungs-Unterbrecher nach irgend einem der Ansprüche 7 und 8 um einen Schalt-Hochspannungs-Generator herzustellen, durch eine Anordnung gekennzeichnet, die einen ersten (E1), einen zweiten (E2) und einen dritten (E3) Hochspannungs-Block aufweist, die in Serie geschaltet sind und jeweils durch ihre Gleich-Polarität Klemmen über einen statischen Hochspannungs-Unterbrecher (11, 12, 13) an eine Klemme (P) zum Anschluss an die äussere Last angeschlossen sind, wobei der zweite Hochspannungs-Block (E2) über einen Zwei-Richtungs-Unterbrecher (I2) angeschlossen ist, wobei der Steuerkreis (3) die aufeinanderfolgende und getrennte Schliessung der Unterbrecher im Laufe eines Betriebs-Zyklus steuert, um drei Hochspannungs-Stufen zu erzeugen.

10. Verwendung nach Anspruch 9, dadurch gekennzeichnet, dass der Schalt-Hochspannungs-Generator für die Speisung einer Eindrigungs-Kathodenröhre bestimmt ist.

# FIG_1

# FIG_3

# FIG_2

## FIG_4

## FIG_5